(19) Europäisches Patentamt
European Patent Office
Office européen des brevets

(11) **EP 4 753 322 A1**

(12) **EUROPEAN PATENT APPLICATION**
published in accordance with Art. 153(4) EPC

(43) Date of publication:
**03.06.2026 Bulletin 2026/23**

(21) Application number: **23946666.7**

(22) Date of filing: **25.07.2023**

(51) International Patent Classification (IPC):
**H04W 24/10** (2009.01)

(52) Cooperative Patent Classification (CPC):
**H04W 24/10**

(86) International application number:
**PCT/JP2023/027267**

(87) International publication number:
**WO 2025/022583 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **ECHIGO, Haruhi**
  **Tokyo 100-6150 (JP)**

• **HARADA, Hiroki**
  **Tokyo 100-6150 (JP)**
• **NAGATA, Satoshi**
  **Tokyo 100-6150 (JP)**
• **LIU, Liu**
  **Beijing 100190 (CN)**
• **PI, Qiping**
  **Beijing 100190 (CN)**
• **YOU, Luhua**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes: a receiving section that receives a configuration related to monitor result reporting of a model; and a control section that controls the monitor result reporting. The control section controls timing of the monitor result reporting or channel state information (CSI) reporting, based on information associated with the monitor result reporting and the CSI reporting. According to one aspect of the present disclosure, it is possible to achieve appropriate overhead reduction/channel estimation/resource use.

FIG. 8

## Description

Technical Field

The present disclosure relates to a terminal, a radio communication method, and a base station in next-generation mobile communication systems.

Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication technologies, it is studied to utilize the artificial intelligence (AI) technology, such as machine learning (ML), for control, management, and the like of networks/devices.

As a use case of utilizing an AI model, channel state information (CSI) compression using a two-sided AI model is under study. Such a CSI compression method may be referred to as AI-based CSI feedback, and may be implemented, for example, by using an autoencoder.

Performance monitoring of an AI model is under study. The performance monitoring of an AI model may be performed in a terminal (user terminal, User Equipment (UE)) or may be performed in a base station (BS).

In the above-described performance monitoring, a method of reporting a result after monitoring (monitored result, which may be referred to as a monitor result) is studied. Specifically, it is studied to adopt a framework of CSI reporting for the monitored result.

In this case, a specific operation such as what kind of processing should be performed from measurement (performance evaluation) to the reporting is not clear. The framework of CSI reporting is under further study.

Thus, unless various definitions accompanying performance monitoring result reporting/CSI reporting are clear, appropriate overhead reduction/highly accurate channel estimation/highly efficient resource use cannot be achieved, which may suppress improvement of communication throughput/communication quality.

Thus, an object of the present disclosure is to provide a terminal, a radio communication method, and a base station that can achieve appropriate overhead reduction/channel estimation/resource use.

Solution to Problem

A terminal according to one aspect of the present disclosure includes: a receiving section that receives a configuration related to monitor result reporting of a model; and a control section that controls the monitor result reporting. The control section controls timing of the monitor result reporting or channel state information (CSI) reporting, based on information associated with the monitor result reporting and the CSI reporting. Advantageous Effects of Invention

According to one aspect of the present disclosure, it is possible to achieve suitable overhead reduction/channel estimation/resource use.

Brief Description of Drawings

[FIG. 1] FIG. 1 is a diagram to show an example of an AI model management framework.
[FIG. 2] FIG. 2 is a diagram to show an example of CSI feedback using an encoder/decoder.
[FIG. 3] FIG. 3 is a diagram to show an example of a life cycle management framework for performance monitoring at a UE according to one embodiment.
[FIG. 4] FIG. 4 is a diagram to show an example of a life cycle management framework for performance monitoring at a BS according to one embodiment.
[FIG. 5] FIG. 5A and FIG. 5B are diagrams to show examples of AI-based beam reporting.
[FIG. 6] FIG. 6 is a diagram to show an example of a condition for reporting CSI to a base station.
[FIG. 7] FIG. 7A and FIG. 7B are diagrams to show examples of a CSI computation delay requirement.
[FIG. 8] FIG. 8 is a diagram to show an example of a time gap ($Z_{ref}$, $Z'_{ref}$) until CSI transmission.
[FIG. 9] FIG. 9 is a diagram to show an example of two-stage beam measurement.
[FIG. 10] FIG. 10 is a diagram to show an example of a CSI reference resource.
[FIG. 11] FIG. 11 is a diagram to show an example of a schematic structure of a radio communication system according to one embodiment.

[FIG. 12] FIG. 12 is a diagram to show an example of a structure of a base station according to one embodiment.

[FIG. 13] FIG. 13 is a diagram to show an example of a structure of a user terminal according to one embodiment.

[FIG. 14] FIG. 14 is a diagram to show an example of a hardware structure of the base station and the user terminal according to one embodiment.

[FIG. 15] FIG. 15 is a diagram to show an example of a vehicle according to one embodiment.

Description of Embodiments

(Channel State Information (CSI) Measurement/Reporting)

CSI measurement/reporting in an existing NR specification (for example, Rel-15 NR to Rel-17 NR) will be described. A UE generates (also referred to as determines, computes, estimates, measures, and the like) CSI, based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

In the present disclosure, the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), information related to a channel matrix (or channel coefficient), information related to a precoding matrix (or precoding coefficient), information related to a beam/Transmission Configuration Indication state (TCI state)/spatial relation, and the like.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

In the present disclosure, the RS, a CSI-RS, a non-zero power (NZP) CSI-RS, a zero power (ZP) CSI-RS, CSI interference measurement (CSI-IM), a CSI-SSB, and an SSB may be interchangeably interpreted. The CSI-RS may include another reference signal.

The UE may receive configuration information related to a CSI report (which may be referred to as CSI report configuration, report setting, and the like), and may control, based on the configuration information, CSI reporting. The report configuration information may be, for example, a radio resource control (RRC) information element (IE) "CSI-ReportConfig."

The CSI report configuration may include at least one of information below:

- Information (resource configuration ID, for example, "CSI-ResourceConfigId") related to a CSI resource used for CSI measurement.
- Information (report quantity information, for example, "reportQuantity") related to one or more quantities (CSI parameters) of the CSI to be reported.
- Report type information (for example, "reportConfigType") indicating behavior of the time domain for report configuration.

In the present disclosure, a CSI resource may be interpreted as a time instance, a CSI-RS occasion/CSI-IM occasion/SSB occasion, (one/plurality of) occasions of a CSI-RS resource, a CSI occasion, an occasion, a CSI-RS resource/CSI-IM resource/SSB resource, a time resource, a frequency resource, an antenna port (for example, a CSI-RS port), or the like, and vice versa. A time unit of the CSI resource may be a slot, a symbol, or the like.

Information related to the CSI resource above may include information related to a CSI resource for channel measurement, information related to a CSI resource (NZP-CSI-RS resource) for interference measurement, information related to a CSI-IM resource for interference measurement, and the like.

The report quantity information may indicate any one or combinations of the above CSI parameters (for example, CRI, RI, PMI, CQI, LI, L1-RSRP, and the like).

The report type information may indicate a periodic CSI (P-CSI) report, an aperiodic CSI (A-CSI) report, or a semi-persistent (semi-permanent) CSI (SP-CSI) report.

The UE performs CSI-RS/SSB/CSI-IM measurement, based on CSI resource configuration (CSI resource configuration associated with CSI-ResourceConfigId) corresponding to CSI report configuration, and derives, based on the measurement result, CSI to be reported.

The CSI resource configuration (for example, CSI-ResourceConfig information element) may include a csi-RS-ResourceSetList field indicating a more specific CSI-RS/SSB resource, resource type information (for example, "resourceType") indicating behavior of the time domain for resource configuration, and the like.

The resource type information may indicate a P-CSI resource, an A-CSI resource, or an SP-CSI resource.

(Application of Artificial Intelligence (AI) Technology to Radio Communication)

For future radio communication technologies, it is studied to utilize the AI technology, such as machine learning (ML), for control, management, and the like of networks/devices.

For example, it is studied that a terminal (user terminal, User Equipment (UE))/base station (BS) utilizes the AI technology for improvement in channel state information (CSI) feedback (for example, overhead reduction, accuracy enhancement, prediction), enhancement in beam management (for example, accuracy enhancement, prediction in time/spatial domain), enhancement in location measurement (for example, location estimation/prediction enhancement), and the like.

The AI model may output, based on the input information, at least one piece of information among an estimated value, a predicted value, a selected operation, classification, and the like. The UE/BS may input channel state information, a reference signal measurement value, and the like to the AI model and output highly accurate channel state information/measured value/beam selection/location, future channel state information/radio link quality, and the like.

Note that, in the present disclosure, AI may be interpreted as an object (also referred to as a target, data, function, program, and the like) having (implementing) at least one of the following features:

- estimation based on observed or collected information,
- selection based on observed or collected information, and
- prediction based on observed or collected information.

In the present disclosure, estimation, prediction, and inference may be interchangeably interpreted. In the present disclosure, "estimate," "predict," and "infer" may be interchangeably interpreted.

In the present disclosure, the object may be, for example, an apparatus, a device, or the like, such as a UE or a BS. In the present disclosure, the object may correspond to a program/model/entity operating in the apparatus.

Note that, in the present disclosure, the AI model may be interpreted as an object having (implementing) at least one of the following features:

- feeding information to thereby generate an estimated value,
- feeding information to thereby predict an estimated value,
- feeding information to thereby find a feature, and
- feeding information to thereby select an operation.

In the present disclosure, the AI model may mean a data-driven algorithm that applies AI technology and generates a set of outputs based on a set of inputs.

In the present disclosure, an AI model, a model, an ML model, predictive analytics, a predictive analytics model, a tool, an autoencoder, an encoder, a decoder, a neural network model, an AI algorithm, a scheme, and the like may be interchangeably interpreted. The AI model may be derived by using at least one of regression analysis (for example, linear regression analysis, multiple regression analysis, logistic regression analysis), support vector machine, random forest, neural network, deep learning, and the like.

In the present disclosure, the autoencoder may be interpreted as any autoencoder such as a stacked autoencoder and a convolutional autoencoder, and vice versa. The encoder/decoder of the present disclosure may adopt a model of Residual Network (ResNet), DenseNet, RefineNet, or the like.

In the present disclosure, an encoder, encoding, encode/encoded, modification/change/control by an encoder, compressing, compress/compressed, generating, generate/generated, and the like may be interchangeably interpreted.

In the present disclosure, a decoder, decoding, decode/decoded, modification/change/control by a decoder, decompressing, decompress/decompressed, reconstructing, reconstruct/reconstructed, and the like may be interchangeably interpreted.

In the present disclosure, a layer (for an AI model) may be interpreted as a layer (input layer, intermediate layer, or the like) used in an AI model, and vice versa. The layer of the present disclosure may correspond to at least one of an input layer, an intermediated layer, an output layer, a batch normalization layer, a convolutional layer, an activation layer, a dense layer, a normalization layer, a pooling layer, an attention layer, a dropout layer, a fully-connected layer, and the like.

In the present disclosure, examples of an AI model training method may include supervised learning, unsupervised learning, reinforcement learning, federated learning, and the like. The supervised learning may mean processing of training a model, based on an input and a corresponding label. The unsupervised learning may mean processing of training a model without labeled data. The reinforcement learning may mean processing of training a model, based on an input (i.e., a state) and a feedback signal (i.e., a reward) generated from a model output (i.e., an action), in an environment in which models interact with each other.

In the present disclosure, generation, computation, derivation, and the like may be interchangeably interpreted. In the present disclosure, "perform," "manage," "operate," "carry out," and the like may be interchangeably interpreted. In the present disclosure, training, learning, update, retraining, and the like may be interchangeably interpreted. In the present disclosure, inference, after-training, substantial use, actual use, and the like may be interchangeably interpreted. In the present disclosure, a signal may be interpreted as a signal/-channel, and vice versa.

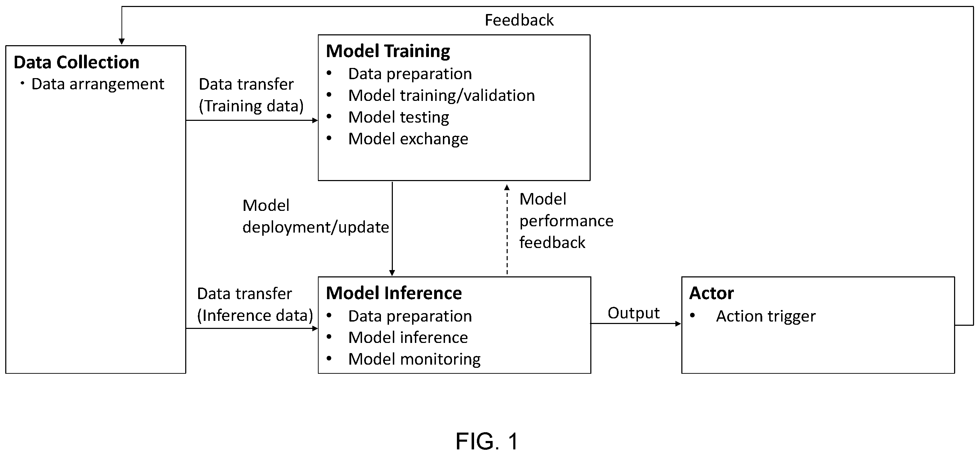

FIG. 1 is a diagram to show an example of an AI model management framework. In the present example, stages related to an AI model are shown using blocks. The present example is also expressed as AI model life cycle management.

A data collection stage corresponds to a stage to collect data for generating/updating an AI model. The data collection stage may include data arrangement (for example, determining which data is transferred for model training/model inference), data transfer (for example, transferring data to an entity (for example, UE, gNB) performing model training/model inference), and the like.

Note that data collection may mean processing in which a network node, a management entity, or a UE collects data for the purpose of AI model training/data analysis/inference. In the present disclosure, processing and a procedure may be interchangeably interpreted.

In a model training stage, the model training is performed based on data (training data) transferred from the collection stage. This stage may include data preparation (for example, performing pre-processing, cleaning, formatting, conversion, and the like of data), model training/validation, model testing (for example, checking whether a trained model meets a performance threshold value), model exchange (for example, transferring a model for distributed learning), model deployment/update (deploying/updating a model for an entity performing model inference), and the like.

Note that AI model training may mean processing for training an AI model with a data-driven method and acquiring a trained AI model for inference.

AI model validation may mean sub-processing of training for evaluating quality of an AI model by using a data set different from the data set used for model training. The sub-processing is useful for selection of model parameters generalized beyond the data set used for model training.

AI model testing may mean sub-processing of training for evaluating performance of a final AI model by using a data set different from the data set used for model training/validation. Note that testing may not presuppose subsequent model tuning, unlike validation.

In a model inference stage, model inference is performed based on the data (inference data) transferred from the collection stage. This stage may include data preparation (for example, performing pre-processing, cleaning, formatting, conversion, and the like of data), model inference, model monitoring (for example, monitoring of performance of model inference), model performance feedback (feeding back model performance to an entity performing model training), output (providing a model output to an actor), and the like.

Note that AI model inference may mean processing for producing a set of outputs from a set of inputs by using a trained AI model.

A UE side model may mean an AI model whose inference is entirely performed in the UE. A network side model may mean an AI model whose inference is entirely performed in the network (for example, the gNB).

A one-sided model may mean the UE side model or the network side model. A two-sided model may mean a pair of AI models that perform joint inference. Here, joint inference may include AI inference whose inference is jointly performed by the UE and the network, and for example, a first part of the inference may be first performed by the UE and the remaining part may be performed by the gNB (or vice versa).

AI model monitoring may mean processing for monitoring inference performance of an AI model, and may be interpreted as model performance monitoring, performance monitoring, or the like, and vice versa.

Note that model registration may mean assigning a version identifier to a model and making the model executable by compiling it into specific hardware used in the inference stage. Model deployment may mean delivering a runtime image (or an image of an execution environment) of a fully developed and tested model to a target (for example, the UE/gNB) in which inference is performed (or enabling the runtime image in the target).

An actor stage may include an action trigger (for example, determining whether to trigger action to another entity), feedback (for example, feeding back information required for training data/inference data/performance feedback), and the like.

Note that, for example, training of a model for mobility optimization may be performed in, for example, maintenance, operation, and administration in a network (NW) (Operation, Administration and Maintenance (Management) (OAM))/gNodeB (gNB). In the former case, interoperation, large amounts of storage, operator manageability, and model flexibility (such as feature engineering) are advantageous. In the latter case, model update latency, data exchange for model deployment, and the like are advantageously not required. The inference of the model above may be performed in the gNB, for example.

The entity performing training/inference may differ depending on a use case (i.e., a function of the AI model). The function of the AI model may include beam management, beam prediction, an autoencoder (or information compression), CSI feedback, positioning, and the like.

For example, for AI-aided beam management based on a measurement report, the OAM/gNB may perform the model training, and the gNB may perform the model inference.

For AI-aided UE-assisted positioning, a Location Management Function (LMF) may perform the model training, and the LMF may perform the model inference.

For CSI feedback/channel estimation using an autoencoder, the OAM/gNB/UE may perform the model training, and the gNB/UE may perform the model inference (jointly).

For AI-aided beam management or AI-aided UE-based positioning based on beam measurements, the OAM/gNB/UE may perform the model training, and the UE may perform the model inference.

Note that model activation may mean activating an AI model for a specific function. Model deactivation may mean deactivating an AI model for a specific function. Model switching may mean deactivating a currently active AI model for a specific function and activating a different AI model.

Model transfer may mean delivering an AI model on an air interface. The delivering may include delivering one or both of parameters of a model structure known to a receiving side and a new model having parameters. The delivering may include a full model or a partial model. Model download may mean model transfer from the network to the UE. Model upload may mean model transfer from the UE to the network.

(AI-based CSI Feedback)

As a use case for utilization of an AI model, CSI compression using a two-sided AI model is under study. Such a CSI compression method may be referred to as AI-based CSI feedback, and may be implemented, for example, by using an autoencoder.

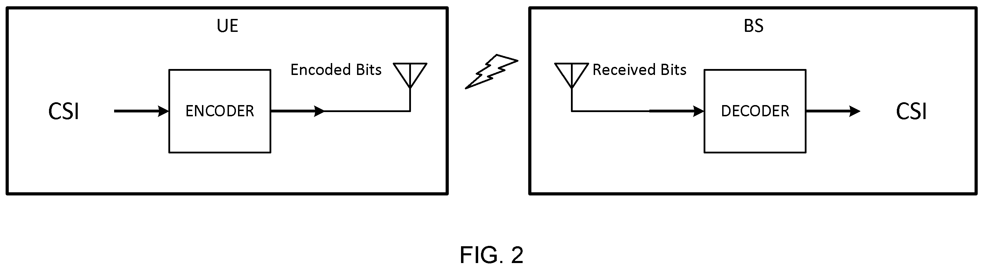

FIG. 2 is a diagram to show an example of CSI feedback using an encoder/decoder. The UE transmits, from an antenna, information (CSI feedback information) including an encoded bit output by inputting CSI to an encoder. The BS inputs the bit of the received CSI feedback information to a corresponding decoder to obtain output CSI.

The input CSI may include, for example, information on a channel coefficient (element of a channel matrix) or information on a precoding coefficient (element of a precoding matrix). In other words, the CSI may correspond to information related to a channel state in a spatial-frequency domain. Note that the input may include information other than the CSI.

Note that the CSI output from the decoder may be reconstructed CSI corresponding to the input to the encoder or may be CSI different from the input to the encoder (for example, precoding coefficient information or the like, if the input information is channel coefficient information).

Note that the encoder/decoder may include pre-processing for the input, post-processing for the output, and the like.

The encoded bit is compressed more than the input information before the encoding, and communication overhead for CSI feedback can be expected to be reduced.

(Life Cycle Management Framework for Performance Monitoring)

Regarding the AI-based CSI feedback, steps in a life cycle management framework for performance monitoring at the UE/BS will be described below.

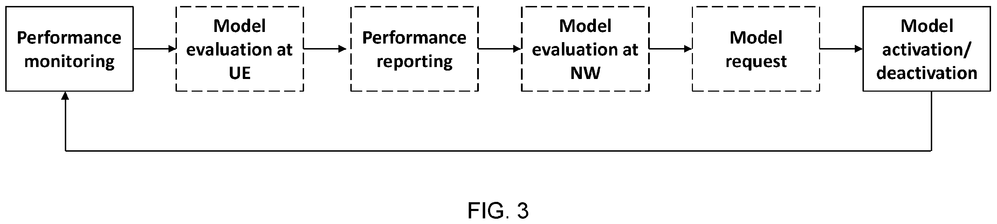

FIG. 3 is a diagram to show an example of the life cycle management framework for the performance monitoring at the UE according to one embodiment.

In a step of performance monitoring, the UE monitors a performance of a model and a fallback scheme (non-AI-based CSI feedback).

In a step of model evaluation at the UE, the UE evaluates a performance of the monitored/reported model and fallback scheme (non-AI-based CSI feedback).

In a step of performance reporting, the UE reports the monitored performance above to a NW.

In a step of model evaluation at the NW, the NW evaluates a performance of the reported model and fallback scheme.

In a step of model request, the UE transmits, to the NW, a request related to which model is to be applied or whether the fallback scheme is to be applied.

In a step of model activation/deactivation, the UE may be indicated with which scheme (model) is to be activated. The UE may activate a certain model or fallback scheme.

Note that some of the illustrated steps (for example, steps represented by broken lines) may be performed as needed.

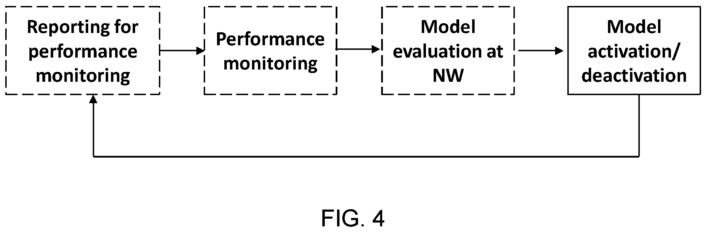

FIG. 4 is a diagram to show an example of the life cycle management framework for the performance monitoring at the BS according to one embodiment.

In a step of reporting for performance monitoring, the UE reports information for performance monitoring at the NW (BS).

In a step of performance monitoring at the NW, the NW monitors a performance of a model and a fallback scheme (non-AI-based CSI feedback).

In a step of model evaluation at the NW, the NW evaluates a performance of the model and fallback scheme.

In a step of model activation/deactivation, the UE may be indicated with which scheme (model) is to be activated. The UE may activate a certain model or fallback scheme.

Note that some of the illustrated steps (for example, steps represented by broken lines) may be performed as needed.

In embodiments to be described below, details of the steps shown in FIG. 3 and FIG. 4 will be described.

(AI-based Beam Reporting)

As a use case for utilization of an AI model, spatial domain downlink (DL) beam prediction or temporal DL beam prediction using a one-sided AI model in a UE or a NW is under study. Such beam prediction method may be referred to as AI-based beam prediction (beam reporting), AI-based beam management (BM), and so on.

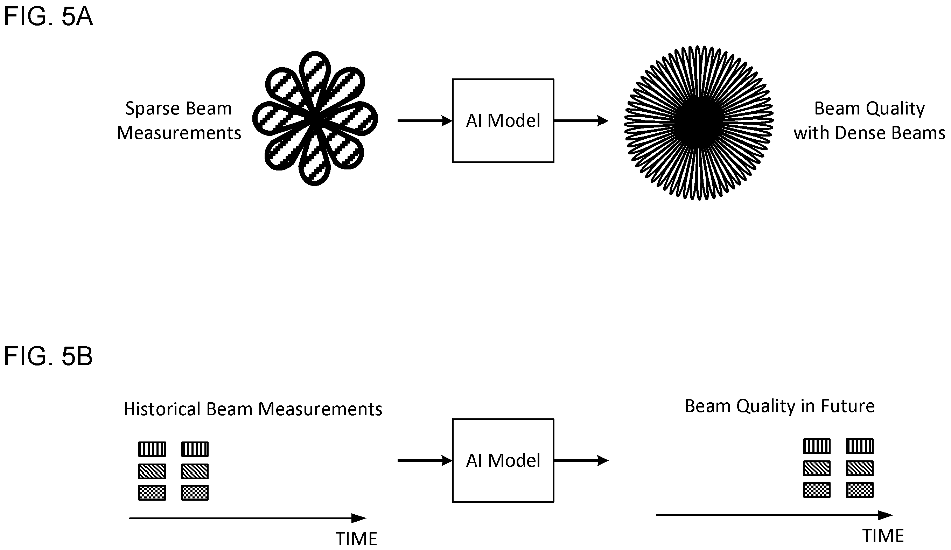

FIG. 5A and FIG. 5B are diagrams to show examples of AI-based beam reporting. FIG. 5A shows the spatial domain DL beam prediction. The UE may measure spatially sparse (or thick) beams, may input a result of the measurement and the like to the AI model, and may output a prediction result of beam quality of spatially dense (or thin) beams.

FIG. 5B shows the temporal DL beam prediction. The UE may measure temporal beams, may input a result of the measurement and the like to the AI model, and may output a prediction result of beam quality of future beams.

Note that the spatial domain DL beam prediction and the temporal DL beam prediction may be referred to as BM case 1 and BM case 2, respectively. The temporal DL beam prediction may also be referred to as, for example, time domain CSI prediction and so on.

Beams/RSs associated with an output (prediction result) from the AI model may be referred to as set A. Beams/RSs associated with an input to the AI model may be referred to as set B.

Examples of candidate inputs to the AI model in BM case 1/2 include an L1-RSRP (Layer 1 Reference Signal Received Power), assistance information (for example, beam shape information, UE location/direction information, transmit beam usage information), channel impulse response (CIR) information, a corresponding DL transmit/receive beam ID, and the like.

Examples of candidate outputs from the AI model in BM case 1 include IDs of the top-K (where K is an integer) transmit/receive beams, predicted L1-RSRPs of these beams, the probability of each beam being in the top-K beams, the angles of these beams, and the like.

Examples of candidate outputs from the AI model in BM case 2 include predicted beam failure in addition to the candidate outputs from the AI model in BM case 1.

(Time Offset for CSI Prediction)

It is studied that a UE performs CSI prediction using AI/ML. Regarding temporal time beam prediction or temporal CSI prediction, there is a possibility that predicted values (prediction time offsets) at a plurality of time instances are provided.

The UE may compute a performance(s) of prediction of Channel State Information (CSI) corresponding to one or more prediction time offsets, and may transmit the performance(s) of the prediction of the CSI to a NW (base station, gNB). The prediction time offset(s) may be, for example, a time gap between CSI prediction timing and CSI measurement timing or report timing.

The prediction time offset(s) may be defined as any one of the following.

Definition 1: A time gap between a time instance associated with prediction (CSI prediction timing) and a time instance associated with measurement used for the prediction (CSI measurement timing).

Definition 2: A time gap between a time instance associated with prediction (CSI prediction timing) and a time instance associated with reporting of a predicted value (timing of reporting of a CSI predicted value).

The time instance associated with the prediction (CSI prediction timing) may, when the predicted value is represented by a value corresponding to a period, be the first/last/middle symbol/slot/subframe in the period, for example.

The time instance associated with the measurement used for the prediction (CSI measurement timing) may be the first/last/middle symbol/slot/subframe for a specific measurement used for the prediction. When measurements at a plurality of time instances are used for the prediction, the specific measurement may be the oldest measurement, the newest measurement, or the middle measurement.

The time instance associated with the report of the predicted value (timing of reporting of the CSI predicted value) may be the first/last/middle symbol/slot/-subframe for a PUSCH/PUCCH resource for communicating the report of the predicted value.

(CSI Computation Time)

An example of CSI computation time (processing time for aperiodic CSI reporting) will be described. A UE reports CSI to a base station (gNB) when conditions (1) and (2) below are satisfied.

(1) Time gap #1 between the last symbol of a PDCCH triggering the CSI and the first symbol of a PUSCH is equal to or greater than Z symbols.
(2) In a case where an aperiodic CSI-RS is used for reporting, time gap #2 between the last symbol of the latest aperiodic CSI-RS and the first symbol of the PUSCH is equal to or greater than Z' symbols.

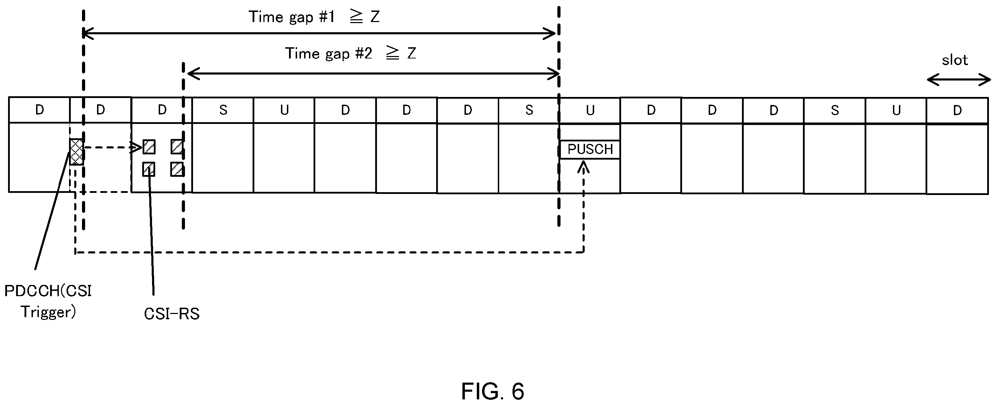

FIG. 6 is a diagram to show an example of a condition for reporting CSI to a base station. Time gaps (Timi gaps) #1 and #2 of (1) and (2) above are shown in FIG. 6.

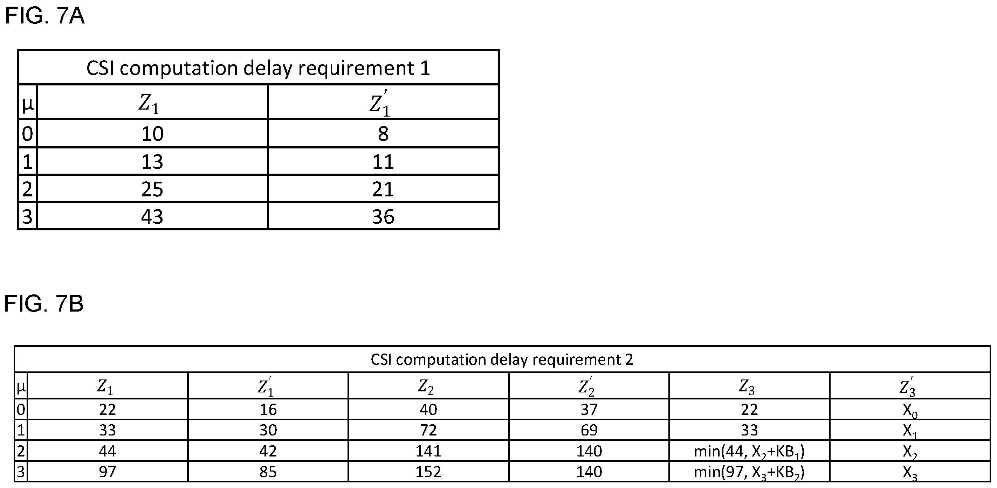

(Z, Z') may depend on CSI computation load. When wideband CSI with up to four CSI-RS ports for a single resource without CRI report and CodebookType is 'typeI-SinglePanel' or reportQuantity is 'cri-RI-CQI' (condition A), (Z, Z') may be defined as follows. Note that FIG. 7A and FIG. 7B are diagrams to show examples of a CSI computation delay requirement.

$$(Z, \ Z') \ = \ (Z_1, \ Z_1')$$

(see FIG. 7A) (condition B: single CSI, CSI only/CSI + Transport Block (TB)/CSI + HARQ, when occupied CPU = 0)

$$(Z, Z') = (Z_1, Z_1')$$

(see FIG. 7B) (when condition B is not satisfied)

When condition A is not satisfied, (Z, Z') may be defined as follows.

$$(Z, Z') = (Z_2, Z_2')$$

(see FIG. 7B)

If CSI reporting is L1-RSRP reporting, (Z, Z') may be defined as follows.

$$(Z, Z') = (Z_3, Z_3')$$

(see FIG. 7B)

Note that $X\mu$ in FIG. 7B corresponds to beamReportTiming of UE capability. $KB_1$ corresponds to beamSwitchTiming of UE capability. Assume that $\mu$ is min $(\mu_{PDCCH}, \mu_{CSI-RS}, \mu_{UL})$.

When any of the following conditions is satisfied, the UE may perform at least one of provision of a valid CSI report (beam report) and update of CSI by using a PUSCH.

- Case where the first uplink symbol of a CSI report is allocated after the first uplink symbol ($Z_{ref}$) after the elapse of a time gap taking account of Z from the last symbol of a PDCCH that triggers beam reporting.
- Case where the first uplink symbol of a CSI report is allocated after the first uplink symbol ($Z'_{ref}$) after the elapse of a time gap taking account of Z' from the last symbol of the RS (for example, CSI-RS/SSB) resource of the channel measurement/interference measurement triggered for the CSI report measurement.

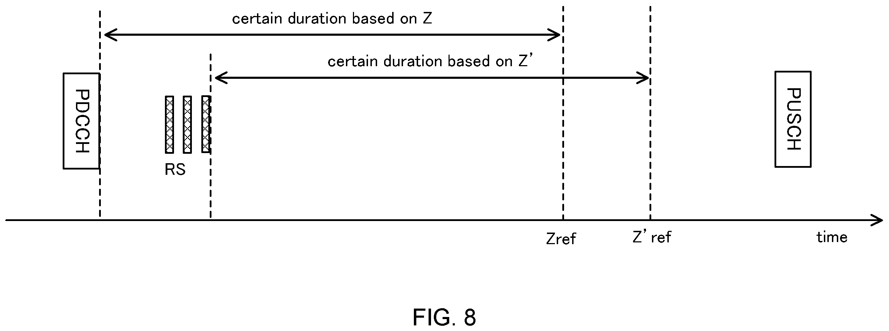

FIG. 8 is a diagram to show an example of a time gap ($Z_{ref}$, $Z'_{ref}$) until CSI transmission. $Z_{ref}$ and $Z'_{ref}$ above are expressed as shown in FIG. 8.

The UE may determine at least one of thresholds Z and Z' described above, based on a value from a CSI computation delay requirement table (3GPP TS 38.214 Tables 5.4-1 and 5.4-2) in existing Rel-15/16 NR.

Here, $Z_{ref}$ and $Z'_{ref}$ may be determined as follows.

- $Z_{ref}$ may be the uplink symbol a certain duration after the end of the last symbol of a PDCCH that triggers CSI reporting (next uplink symbol). The certain duration may be determined based on Z.
- $Z'_{ref}$ may be the uplink symbol (next uplink symbol) a certain duration after the end of the latest aperiodic last symbol of a CSI-RS resource for channel measurement/CSI-IM resource for interference measurement. The certain duration may be determined based on Z'.

(Two-stage (step) Beam Measurement)

In future radio communication systems (for example, Rel. 18 or later versions), introduction of two-stage (step) beam measurement in beam management is under study.

In beam measurement using one-stage beam prediction, measurement of the beams/RSs in a given set (which may be referred to as set B) may be performed to predict beams/RSs in another set (which may be referred to as set A).

Among the beams for which the prediction has been performed, the top N (N is a specific positive integer) CRIs/SSBRIs predicted to have high qualities and the beam qualities (for example, L1-RSRPs/L1-SINRs) corresponding to the CRIs/SSBRIs may be reported.

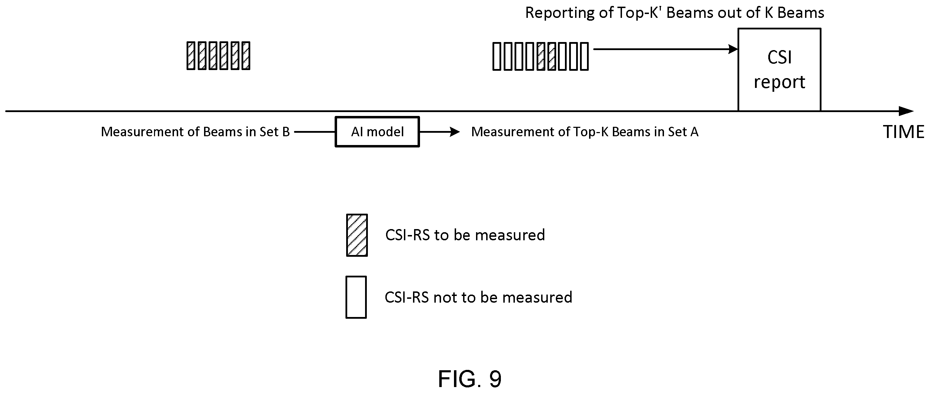

Two-stage beam prediction will be described with reference to FIG. 9.

In beam measurement using two-stage beam prediction, first, measurement of the beams/RSs in a given set (which may be referred to as set B) may be performed to predict beams/RSs in another set (which may be referred to as set A).

Next, among the beams for which the prediction has been performed, the top K (K is a specific positive integer) beams/RSs predicted to have good qualities may be measured.

Further, among the K measured beams/RSs, the top K' (K' is a specific positive integer) CRIs/SSBRIs predicted to have high qualities and the beam qualities (for example, L1-RSRPs/L1-SINRs) corresponding to the CRIs/SSBRIs may be reported.

Note that, in the present disclosure, the measurement of beams/RSs performed first may be referred to as first measurement or first-stage (step) measurement. In the present disclosure, the measurement of beams/RSs performed after the first measurement may be referred to as second measurement or second-stage (step) measurement.

In the above-described two-stage beam measurement, a time line taking account of performance monitoring is studied.

For example, computation of performance metrics may be derived from a plurality of measurement values of DL-RSs.

Here, for an example of measurement values (model inputs) required for execution of a model/functionality, the beam measurement of set B described above can used.

For an example of measurement values for performance monitoring (for reference of performance monitoring), the beam measurement of set A described above can be used.

As described above, CSI reporting may be associated with two types of RS resources described above. It is assumed that the time line taking account of performance monitoring is determined based on model input measurement values or measurement values for reference of performance monitoring.

(CSI Reference Resource)

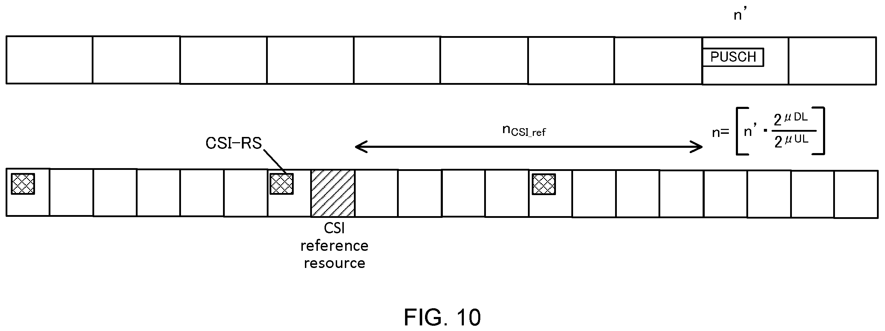

The CSI reference resource of a serving cell may be defined as follows. The CSI reference resource is shown in FIG. 10.

- In the frequency domain, the band to which derived CSI relates.
- In the time domain, single DL slot n - $n_{CSI\_ref}$ - $K_{offset}$. Note that a CSI report is transmitted in UL slot n' (n'-th UL slot). The relationship between n and n' is as shown in FIG. 10. In other words, n is a DL slot corresponding to UL slot n' in which the CSI report is transmitted.

In a case of periodic CSI and semi-persistent CSI reporting, $n_{CSI\_ref}$ is the smallest value corresponding to a valid DL slot ($4 \cdot 2^{\mu DL}$ or more for single CSI-RS/DL slot for SSB, and $5 \cdot 2^{\mu DL}$ or more for multiple CSI-RSs/SSBDL slots).

In a case of aperiodic CSI reporting, $n_{CSI\_ref}$ is assumed to be the smallest value corresponding to a valid DL slot (equal to or larger than $[Z'/N_{symb}^{slot}]$). Since a UE is indicated by DCI to report CSI in the same slot as that of a CSI request, $n_{CSI\_ref}$ corresponds to the same slot as the CSI request.

After configuration (reconfiguration) of CSI reporting, activation of a serving cell, change of a BWP, or activation of semi-persistent CSI, the UE may transmit a CSI report only in a case where a CSI-RS transmission occasion for channel measurement or a CSI interference measurement (CSI-IM) occasion for interference measurement is received after the CSI reference resource. Otherwise (in other cases), the UE may drop CSI reporting.

In a case where discontinuous reception (DRX) is configured, the above-described occasion (transmission occasion) needs to be within the active time of DRX, and otherwise, the UE may drop CSI reporting.

For example, in a case where the higher layer parameter ps-TransmitOtherPeriodicCSI is configured, the UE may transmit a CSI report in drx-onDurationTimer even when CSI is based on an occasion when drx-onDurationTimer does not start.

When timeRestrictionForChannelMeasurements in the higher layer parameter CSI-ReportConfig is configured at "notConfigured," the UE has to derive channel measurement for computing an L1-RSRP reported in UL slot n (n-th UL slot), based only on the SS/PBCH or the NZP CSI-RS, so as not to be later than the CSI reference resource associated with the CSI resource setting.

In other words, the UE has to derive channel measurement (value) for computing a value to report, based only on the specific RS after the CSI reference resource.

In this case, it is assumed that additional processing time is needed for channel measurement in performance monitoring.

When the UE derives CSI, based on a plurality of times of CSI-RS occasions, it is assumed that the UE cannot acquire appropriate CSI only with the latest CSI.

(CSI Computation Using AI/ML Inference)

A UE may compute CSI by using AI/ML inference. For example, the UE may apply an auto-encoder for a predicted RSRP/SINR report and CSI feedback. When the UE applies AI/ML inference, computation by the CPU/GPU may be performed. When the UE applies AI/ML inference to CSI computation, CSI processing criteria may be enhanced in consideration of the processing capability of AI/ML.

In current Rel. 16, simultaneous computation of CSI is limited by CPU capability. When simultaneous CPU processing capability is greater than the capability of the UE, the UE need not preferentially update one or some CSI reports.

Specifically, in current Rel. 16, the UE indicates the supported number $N_{CPU}$ of simultaneous CSI computations with the parameters simultaneousCSI-ReportsPerCC in a component carrier and simultaneousCSI-ReportsAllCC across all component carriers. The UE supporting $N_{CPU}$ simultaneous CSI computations means that the UE has $N_{CPU}$ CSI processing units (CPUs) for processing CSI reports. In a given OFDM symbol, when L CPUs are occupied for CSI report computation, the UE has ($N_{CPU}$ - L) unoccupied CPUs. In the same OFDM symbol where ($N_{CPU}$ - L) CPUs are not occupied, when N CSI reports start to occupy respective CPUs, each CSI report (n = 0, ..., N - 1) corresponds to $O_{CPU}^{(n)}$, and the UE need not update (N - M) requested CSI reports with the lowest priority (where M ($0 \le M \le N$) is the largest value that satisfies $\sum_{n=0}^{M-1} O_{CPU}^{(n)} \le N_{CPU} - L$).

(Number of Occupied CPUs)

It is conceivable that the following values are configured as the number $O_{CPU}$ of occupied CPUs.

- When reportQuantity is configured at none (TRS is applied), $O_{CPU} = 0$ is configured.
- When reportQuantity is configured at 'cri-RSRP,' 'ssb-Index-RSRP,' 'cri-SINR,' 'ssb-Index-SINR,' or 'none' (TRS is not applied), $O_{CPU} = 1$ is configured.

In cases (1) to (4) below, $O_{CPU} = N_{CPU}$ holds.

(1) At least one of an AP CSI-RS without HARQ-ACK and a TB is configured.
(2) A CPU with L = 0 is occupied.
(3) CSI is a single CSI in wideband and is equivalent to up to four CSI-RS ports without CRI reporting.
(4) codebookType is configured at typeI-SinglePanel, or reportQuantity is configured at cri-RI-CQI.

Otherwise, $O_{CPU} = K_S$ holds with specific exceptions. $K_S$ denotes the number of CSI-RS resources in the CSI-RS resource set for channel measurement. The UE may update a CSI report when L CPUs are occupied and $\Sigma_{n=0}^{M-1} O_{CPU}^{(n)} \leq N_{CPU}$ - L is satisfied. Here, an example of the specific exceptions is the group-based beam reporting of Rel. 17.

In view of the above, the number of occupied CPUs for monitor result reporting is also studied. In this case, a dedicated definition is considered to be necessary. For example, the following computations are needed for computation of a monitor result.

- Computation of an inference result
- Computation of performance metrics
- Check of whether an event occurrence based on performance metrics is present, when the monitor result is a content related to an event occurrence

(Analysis)

In the above-described performance monitoring, a method of reporting a result after monitoring (monitored result, which may be referred to as a monitor result) is studied. Specifically, it is studied to adopt a framework of CSI reporting for the monitored result.

In this case, a specific operation such as what kind of processing should be performed from measurement (performance evaluation) to the reporting is not clear. The framework of CSI reporting is under further study.

Unless various definitions accompanying performance monitoring result reporting/CSI reporting are clear, appropriate overhead reduction/highly accurate channel estimation/highly efficient resource use cannot be achieved, which may suppress improvement of communication throughput/communication quality.

Thus, the inventors of the present invention came up with the idea of a preferable method of performing performance monitoring result reporting/CSI reporting.

(Various Interpretations and the like)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a CSI-RS, a non-zero power (NZP) CSI-RS, a zero power (ZP) CSI-RS, and CSI interference measurement (CSI-IM) may be interchangeably interpreted. The CSI-RS may include another reference signal.

In the present disclosure, a measured/reported RS may mean an RS measured/reported for a CSI report.

In the present disclosure, timing, a time point, a time, a slot, a sub-slot, a symbol, a subframe, and the like may be interchangeably interpreted.

In the present disclosure, a direction, an axis, a dimension, a domain, a polarization, a polarization component, and the like may be interchangeably interpreted.

In the present disclosure, estimation, prediction, and inference may be interchangeably interpreted. In the present disclosure, "estimate," "predict," and "infer" may be interchangeably interpreted.

In the present disclosure, an autoencoder, an encoder, a decoder, and the like may each be interpreted as at least one of a model, an ML model, a neural network model, an AI model, an AI algorithm, and the like. An autoencoder may be interpreted as any autoencoder such as a stacked autoencoder or a convolutional autoencoder, and vice versa. The encoder/decoder of the present disclosure may adopt a model of Residual Network (ResNet), DenseNet, RefineNet, or the like.

In the present disclosure, a bit, a bit string, a bit sequence, a sequence, a value, information, a value obtained from a bit, information obtained from a bit, and the like may be interchangeably interpreted.

In the present disclosure, a layer (for an encoder) may be interpreted as a layer (input layer, intermediate layer, or the like) used in an AI model, and vice versa. The layer of the present disclosure may correspond to at least one of an input layer, an intermediated layer, an output layer, a batch normalization layer, a convolutional layer, an activation layer, a dense layer, a normalization layer, a pooling layer, an attention layer, a dropout layer, a fully-connected layer, and the like.

In the present disclosure, an RSRP may be interpreted as any parameter (for example, an RSRQ, a SINR, or CSI) related to received power/reception quality, and vice versa.

In the present disclosure, the RS may be a CSI-RS, an SS/PBCH block (SS block (SSB)), or the like, for example. An RS index may be a CSI-RS resource indicator (CRI), an SS/PBCH block resource indicator (SSBRI), or the like.

In the present disclosure, the channel measurement/estimation may be performed by using at least one of a channel state information reference signal (CSI-RS), a synchronization signal (SS), a synchronization signal/-broadcast channel (Synchronization Signal/Physical Broadcast Channel (SS/PBCH)) block, a demodulation reference signal (DMRS), a reference signal for measurement (Sounding Reference Signal (SRS)), and the like, for example.

In the present disclosure, receive beam assumption, the number of receive beams, the index (indices) of a receive beam(s), receive beam selection, receive beam configuration, and receive beam indication may be interchangeably interpreted. In the present disclosure, a receive beam, a transmit beam, a DL receive beam, a DL transmit beam, and a pair of a transmit beam and a receive beam may be interchangeably interpreted. In the present disclosure, a transmit/receive beam may be interpreted as a transmit/receive beam for beam prediction and a transmit/receive beam for CSI measurement/reporting for beam prediction, and vice versa.

In the present disclosure, functionality may mean the use of a model or the physical meaning of the input/output of a model. A plurality of models may have the same functionality. Monitoring (checking of performance)/activation/deactivation/switching/fallback/update may be indicated (controlled) based on functionality (for example, for each functionality).

A model ID may mean an identifier of a model (or a set of models). A plurality of models may be assigned the same model ID in an actual deployment. In this case, these models are actually different models (for example, different in the number of layers), but may be treated as the same model.

Note that, in the present disclosure, a model ID and a meta-information ID (or indicating a set of pieces of meta-information) may be interchangeably interpreted. Meta-information (or meta-information ID) may be associated with information related to applicability of a model/functionality, an environment, a configuration of a UE/gNB, or the like, for example.

In the present disclosure, functionality may be interpreted simply as a "function."

In the present disclosure, functionality, a function, a functionality ID, a model, and a model ID may be interchangeably interpreted.

In the present disclosure, applicable update, update of an applicable model/functionality, update of applicability of a model/functionality, and applicable update may be interchangeably interpreted.

In the present disclosure, update, reporting, and transmission may be interchangeably interpreted.

In the present disclosure, meta-information, assistance information, sensing information, a KPI, a performance KPI, a UE status, and a status may be interchangeably interpreted.

In the present disclosure, monitor (monitoring) and evaluation may be interchangeably interpreted. Monitoring and evaluating validity/applicability may be interchangeably interpreted.

In the present disclosure, determination, judgment, application of a specific operation, and decision making may be interchangeably interpreted.

In the present disclosure, an entity, a specific entity, a UE, an NW, a gNB, and an LMF may be interchangeably interpreted.

In the present disclosure, an NW, an LMF, a gNB, and a BS may be interchangeably interpreted.

In the present disclosure, performance metrics and monitoring metrics may be interchangeably interpreted.

In the present disclosure, a monitor result, a monitored result, a result after monitoring, and a monitoring result may be interchangeably interpreted.

In the present disclosure, the monitor result may include information related to at least one of an inference result, performance metrics, and the content of an event occurrence/presence or absence of an event occurrence based on performance metrics.

In the present disclosure, in performance monitoring of a model/functionality on the UE side, a UE may report the following information as a monitor result.

- Performance metrics corresponding to a monitored model/functionality.
- Event occurrence in computation of performance metric corresponding to a monitored model/functionality (for example, a positive metric value is greater/smaller than a threshold in a certain duration, or the like).

A CPU/GPU in the present disclosure may mean a Central Processing Unit/Graphics Processing Unit. However, the CPU may mean a CSI processing unit, and the CPU/GPU may be replaced with a CSI processing unit (CPU). The CSI reference resource may be a CSI-RS/CSI-IM/SSB. The CSI may be transmitted on a PUSCH or a

PUCCH.

In the present disclosure, "drop," "stop," "cancel," "puncture," "rate match," "postpone," "do not transmit," and the like may be interchangeably interpreted.

In the present disclosure, a table, an association, and mapping may be interchangeably interpreted.

In the present disclosure, monitor result reporting, CSI reporting, measurement result reporting, and predicted PMI reporting may be interchangeably interpreted.

In the present disclosure, an RS resource for input may mean an RS resource associated with measurement (value) necessary for executing a model/functionality. An RS resource for reference may mean an RS resource associated with additional measurement (value) necessary for checking performance for a model/functionality.

In the present disclosure, embodiments/options may be employed individually or may be employed in combination of a plurality thereof.

(Radio Communication Method)

Embodiments of the present disclosure can be broadly classified as follows.

- First embodiment: periodic/semi-persistent monitor result reporting.
- Second embodiment: aperiodic monitor result reporting.
- Third embodiment: CSI computation delay requirement.
- Fourth embodiment: time gap from trigger to reporting in monitor result reporting.
- Fifth embodiment: dropping of CSI reporting/monitor result reporting.
- Sixth embodiment: CSI reference resource for monitor result reporting.
- Seventh embodiment: time restriction for CSI reporting/monitor result reporting.
- Eighth embodiment: the number of CPU occupancies in monitor result reporting.

Hereinafter, each embodiment will be described based on these. Each of these embodiments/options may be employed individually or may be appropriately employed in combination of a plurality thereof.

<First Embodiment>

A first embodiment relates to periodic/semi-persistent monitor result reporting.

A UE may be configured to report a monitor result.

The UE may be configured with reporting dedicated to a monitor result as shown in at least one of Alt0 to Alt3 below.

<Alt0>

For the UE, a reporting configuration different from that of CSI reporting may be configured for monitor result reporting.

The CSI reporting and the monitor result report may be associated with each other. In this case, at least one configuration of Alt1 to Alt3 below may be applied to the UE. Alt1 to Alt3 may be applied to, for example, a case of periodic/semi-persistent reporting, but this is not restrictive. Alt1 to Alt3 may also be applied to other cases.

<Alt1>

A plurality of resource settings may be associated with a configuration of CSI reporting.

For example, two, or two or more resource settings for channel measurement may be associated with CSI reporting setting.

In this case, one resource setting may correspond to either an RS resource for input (input RS resource)/RS resource for reference (reference RS resource).

<Alt2>

A plurality of CSI-RS resource sets (selected) from one resource setting may be associated with a CSI reporting setting.

In this case, one CSI-RS resource set may correspond to either an RS resource for input (input RS resource)/RS resource for reference (reference RS resource).

<Alt3>

A plurality of CSI-RS resources (selected) from one CSI-RS resource set may be associated with CSI reporting setting.

In this case, one CSI-RS resource set may include an RS resource for input (input RS resource) and an RS resource for reference (reference RS resource).

In Alt3, a slot offset between the input RS resource and the reference RS resource may be configured/indicated or may be determined based on UE capability/predefined rule.

According to the first embodiment described above, it is possible to appropriately control periodic/semi-persistent monitor result reporting.

<Second Embodiment>

A second embodiment relates to aperiodic monitor result reporting.

A UE may trigger monitor result reporting.

When CSI reporting is associated with the monitor result reporting, the UE may be configured with at least one of Alt1 to Alt4 below.

<Alt1>

One CSI-RS resource set (selected) from one resource setting may be associated for each trigger state.

In this case, the one CSI-RS resource set may include an RS resource for input (input RS resource) and an RS resource for reference (reference RS resource).

The input RS resource and the reference RS resource may be scheduled in different slots. Accordingly, the input RS resource and the reference RS resource can have different timing offsets (slot offsets).

In Alt1, at least one of options 1 and 2 below may further be applied.

(Option 1)

In a case where one aperiodic RS resource set includes a plurality of RS resources, an RS triggering offset may be configured for each RS resource or for each one RS resource set (including a plurality of RS resources, for example).

(Option 2)

The slot offset between the input RS resource and the reference RS resource may be configured/indicated, or may be determined based on UE capability/predefined rule.

<Alt2>

A plurality of CSI-RS resource sets (selected) from one resource setting may be associated for each trigger state.

In this case, one CSI-RS resource set may correspond to either the input RS resource/reference RS resource. Accordingly, the input RS resource and the reference RS resource can have different timing offsets (slot offsets).

<Alt3>

One or more CSI-RS resource sets (selected) from a plurality of resource settings may be associated for each trigger state.

In this case, one resource setting may correspond to either the input RS resource/reference RS resource. Accordingly, the input RS resource and the reference RS resource can have different timing offsets (slot offsets).

<Alt4>

Different trigger states may be configured to trigger the RS resource for aperiodic model input (RS resource for model input) and the reference RS resource.

In this case, the trigger of the monitor result reporting may be associated with any trigger state.

According to the second embodiment described above, it is possible to appropriately control aperiodic monitor result reporting.

<Variations of First/Second Embodiments>

In the first/second embodiment, a UE may expect at least one of the following restrictions on an input RS resource/reference RS resource associated with one CSI reporting setting/one trigger state.

- Same time domain behavior (for example, periodic/semi-persistent/aperiodic).
- Same frequency (for example, PRB/band/frequency domain resource allocation).
- Same periodicity (periodic/semi-persistent).
- The time gap of RS occasions between the input RS resource and the reference RS resource is the same as a predicted time offset of an associated model/functionality.
- The "time gap between the input RS resource and the reference RS resource" - the "predicted time offset of the associated model/functionality" is smaller than a given threshold. Note that the threshold may be determined based on the UE capability/predefined rule.

- The same number of CSI-RS resources are included for each resource set. The resource set may be prepared for the input RS resource/reference RS resource.
- Same frequency density.

When the UE is configured with monitor result reporting, a specific parameter may be set to associate the monitor result reporting with CSI reporting setting. The specific parameter may be, for example, information related to reporting quantity.

As the value to be configured (configurable), a model ID/functionality ID or a value specific to the content of the monitor result may be configured. For example, this value may be a value related to an event occurrence/performance metrics, or a value according to a computed performance metrics.

<Third Embodiment>

A third embodiment relates to a CSI computation delay requirement.

A CSI request field of DCI may trigger CSI reporting on a PUSCH. For example, in a case where the CSI request field of the DCI triggers CSI reporting for a monitor result in the PUSCH, the UE may determine any value of options 1 to 5 below as a time gap (Z, Z') until the transmission of a CSI report. In other words, the UE may control the timing of the CSI reporting (monitor result reporting), based on the following options. Note that the time gap may be referred to as a CSI computation delay requirement.

<Option 1>

A value from an existing CSI computation delay requirement table (for example, table 5.4.-1 in 3GPP Rel. 17 38.214).

<Option 2>

A value obtained by adding an additional value to an existing value in an existing CSI computation delay requirement table. In this case, a UE may request an additional computation time (additional value) for the monitoring reporting (monitor result reporting) in addition to an existing CSI computation time (existing value). The existing value and the existing CSI computation time may be interchangeably interpreted. The additional value and the additional computation time may be interchangeably interpreted.

The additional value of option 2 may be at least one of the following.

- Specific value for each model/functionality or value that is the same among a plurality of models/functionalities.
- Value dependent on the content of a reported monitor result (for example, a value related to an event occurrence/performance metrics, or a value according to computed performance metrics).

These additional values may be determined based on UE capability/predefined rule. As a variation, for example, it may be assumed that a default additional value defined in a specification is applied when no corresponding UE capability is reported. In other words, when the UE does not report the UE capability, the default additional value defined in a specification may be assumed.

The additional value may be determined based on at least one of the following.

- Configured/indicated parameter.
- CSI-RS resource for associated channel measurement/interference measurement, time gap between RS occasions (for example, offset between slots).
- Time domain operation of a CSI-RS resource for associated channel measurement (for example, periodic/semi-persistent/aperiodic).
- Predicted time offset of an associated model/functionality.
- The number of time instances associated with a reported value (result) (for example, the number of slots associated with a reported predicted value).

<Option 3>

Value obtained by adding an additional value to a value in a CSI computation delay requirement table for model inference reporting of a monitored model/functionality. In this case, the UE may request an additional computation time (additional value) for the monitoring reporting (monitor result reporting) in addition to a CSI computation time for the model inference reporting. Note that the additional value may be determined similarly to option 2 described above.

<Option 4>

The same value as the value in the CSI computation delay requirement table for model inference reporting of a monitored model/functionality (same CSI computation delay requirement). Alternatively, the same value as an additional computation time (additional value) for monitoring reporting (monitor result reporting).

<Option 5>

New value of CSI computation delay requirement for monitor result reporting.

The new value of option 5 may be at least one of the following.

- Specific value for each model/functionality or value that is the same among a plurality of models/functionalities.
- Value dependent on the content of a reported monitor result (for example, a value related to an event occurrence/performance metrics, or a value according to a computed performance metrics).

The new value may be determined based on at least one of the following.

- Configured/indicated parameter.
- CSI-RS resource for associated channel measurement/interference measurement, time gap between RS occasions (for example, offset between slots).
- Time domain operation of a CSI-RS resource for associated channel measurement (for example, periodic/semi-persistent/aperiodic).
- Predicted time offset of an associated model/functionality.
- The number of time instances associated with a reported value (result) (for example, the number of slots associated with a reported predicted value).

These new values may be determined based on UE capability/predefined rule. As a variation, for example, it may be assumed that a default additional value defined in a specification is applied when no corresponding UE capability is reported. In other words, when the UE does not report the UE capability, the default additional value defined in a specification may be assumed.

According to the third embodiment described above, a UE can appropriately determine/judge a CSI computation delay requirement (time gap) for CSI reporting/monitor result reporting.

<Fourth Embodiment>

A fourth embodiment relates to a time gap from trigger to reporting in monitor result reporting.

For the monitor result reporting, when the first UL symbol for transmitting the n-th CSI report including influence of timing advance starts earlier than at least one of options 1 to 3 below, the UE may ignore scheduling CSI or need not be required to update CSI for the triggered CSI reporting.

<Option 1>

Symbols in a certain duration from (after) the last symbol in terms of time among the latest symbols of an aperiodic CSI resource for model input.

<Option 2>

Symbols in a certain duration from (after) the last symbol in terms of time of the latest symbols of an aperiodic CSI resource for performance monitoring reference.

<Option 3>

Symbols in a certain duration from (after) the last symbol in terms of time of the latest symbol among CSI resources for model input/performance monitoring reference. In other words, the symbols are those counted from the latest symbol among those of option 1 and option 2.

The certain duration may be different for each option. The certain duration may be derived from the CSI computation delay requirement in the third embodiment.

According to the fourth embodiment described above, it is possible to appropriately control a time gap from trigger to reporting in monitor result reporting.

<Fifth Embodiment>

A fifth embodiment relates to dropping of CSI reporting/monitor result reporting.

The fifth embodiment can be further classified into aspects 5-1 to 5-3 according to the condition of dropping of CSI reporting.

{Aspect 5-1}

After the configuration/reconfiguration of CSI reporting, when at least one condition of options 1 to 3 below is satisfied, a UE may drop monitor result reporting.

<Option 1>

Case where no CSI-RS transmission occasion for channel measurement or no CSI interference measurement (CSI-IM) occasion for model input is present after a CSI reference resource.

<Option 2>

Case where no CSI-RS transmission occasion for channel measurement or no CSI-IM occasion for performance monitoring reference is present after a CSI reference resource.

<Option 3>

Case where no CSI-RS transmission occasion for channel measurement or a CSI-IM occasion for model input and performance monitoring reference is present after a CSI reference resource.

In other words, this is a case where both conditions of option 1 and option 2 are satisfied.

<Variations>

When a monitor result is associated with the performance of a model/functionality that requires (needs) a plurality of CSI-RS transmission occasions/CSI-IM occasions for deriving an output (for example, temporal CSI prediction, temporal beam prediction), the UE may apply options 1 to 3 above with interpretation as follows.

**[0253]** - "No CSI-RS transmission occasion for channel measurement is present" is interpreted as "the number of CSI-RS transmission occasions for channel measurement does not exceed X." "No CSI-IM occasion is present" is interpreted as "the number of CSI-IM occasions does not exceed Y."

X and Y above may each be a configured/indicated parameter, a parameter reported in UE capability, a predefined parameter, or a parameter associated with a model/functionality. X and Y may be parameters common to each other or may be different parameters from each other. Defining X and Y is effective in a case where a plurality of occasions are assumed for time prediction.

{Aspect 5-2}

After configuration/reconfiguration of CSI reporting, when a plurality of CSI-RS transmission occasions/CSI-IM occasions for deriving an output (for example, temporal CSI prediction, temporal beam prediction) are requested (needed), the UE may drop reporting of a result computed by a model/functionality.

The following conditions may further be applied (added).

- Case where X or more CSI-RS transmission occasions for channel measurement are not present after a CSI reference resource.
- Case where Y or more CSI-IM occasions for model inference measurement are not present after a CSI reference resource.

Note that X and Y above may be determined similarly to aspect 5-1.

{Aspect 5-3}

After configuration/reconfiguration of CSI reporting, when a plurality of CSI-RS transmission occasions/CSI-IM occasions are requested (needed) in computation of (to derive) a precoding matrix indicator (PMI), the UE may drop reporting of a predicted PMI.

The predicted PMI may be, for example, an enhanced type 2 predicted PMI or an enhanced type 2 predicted PMI for port selection.

The following conditions may further be applied (added).

- Case where X or more CSI-RS transmission occasions for channel measurement are not present after a CSI reference resource.
- Case where Y or more CSI-IM occasions for model inference measurement are not present after a CSI reference resource.

Note that X and Y above may be determined similarly to aspect 5-1/5-2.

{Variations}

For example, when discontinuous reception (DRX) is configured, conditions of aspects 5-1 to 5-3 described above need be satisfied within the active time of DRX. In other words, when DRX is configured and the conditions of aspects 5-1 to 5-3 are satisfied within the active time of DRX, a UE may drop corresponding CSI reporting/monitor result reporting.

When drx-onDurationTimer is not started and the UE is configured not to transmit a CSI report (for example, when higher layer parameters ps_TransmitOtherPeriodicCSI and TransmitPeriodicL1_RSRP are configured), if a CSI report is present at the time when drx-onDurationTimer is started, the UE may assume that at least one of the conditions of aspects 5-1 to 5-3 above is satisfied even if drx-onDurationTimer is not started.

When the UE is configured not to transmit a CSI report (for example, when the higher layer parameters ps_TransmitOtherPeriodicCSI and TransmitPeriodicL1_RSRP are not configured), at least one of the conditions of aspects 5-1 to 5-3 above need be satisfied even at the time when drx-onDurationTimer is started.

According to the fifth embodiment described above, it is possible to appropriately control dropping of CSI reporting/monitor result reporting.

<Sixth Embodiment>

A sixth embodiment relates to a CSI reference resource for monitor result reporting.

A UE may determine a time domain of a CSI reference resource for monitor result reporting by using at least one of options 1 to 3 below. Note that in a current specification, a valid DL slot consists of DL for which at least one higher layer is configured or a flexible symbol. The valid DL slot is not within the range of a measurement gap configured for the UE.

The UE may determine a time domain of a CSI reference resource, for example, based on at least one of information related to AI/ML model/functionality, a parameter of UE capability (terminal capability), a parameter configured/indicated by physical layer signaling/higher layer signaling, and computation metrics (performance metrics) associated with monitor result reporting.

{Option 1}

As in Rel. 17 described above, the time domain of a CSI reference resource may be a single DL slot in $n - n_{CSI\_ref}$.

<<Options 1-1 and 1-2>>

$n_{CSI\_ref}$ may denote the smallest value greater than X corresponding to a valid DL slot.

X may be $4 \cdot 2^{\mu,DL}$ or $5 \cdot 2^{\mu,DL}$, or may be a different value. X may depend on the numerology (subcarrier spacing) of DL.

The value X may be determined based on at least one of the following.

- Configured/indicated parameter.
- CSI-RS resource for associated channel measurement/interference measurement, time gap between RS occasions (for example, offset between slots).
- Time domain operation of a CSI-RS resource for associated channel measurement (for example, periodic/semi-persistent/aperiodic).
- Predicted time offset of an associated model/functionality.
- The number of time instances associated with a reported value (result) (for example, the number of slots associated with a reported predicted value).

<<Option 1-1>>

X may be determined based on at least one of information related to an AI/ML model/functionality (such as the functionality/FLOP/total parameter of an AI/ML model to be applied), a parameter of UE capability, a parameter configured/indicated by physical layer signaling/higher layer signaling, and a computation metrics (performance metrics) associated with the monitor result reporting.

<<Option 1-2>>

X may be specified in a specification independent of an AI/ML model/functionality and computation metrics (performance metrics) associated with the monitor result reporting.

Options 1-1 and 1-2 may be applied to periodic/semi-persistent CSI reporting derived from the model/functionality.

<<Options 1-3 and 1-4>>

$n_{CSI\_ref}$ may denote the smallest value greater than $[Z' + Y/N_{symb}^{slot}]$ corresponding to a valid DL slot.

<<Option 1-3>>

Y above may be determined based on at least one of information related to an AI/ML model/functionality (such as the functionality/FLOP/total parameter of an AI/ML model to be applied), a parameter of UE capability, a parameter configured/indicated by physical layer signaling/higher layer signaling, and computation metrics (performance metrics) associated with the monitor result reporting.

The value Y may be determined based on at least one of the following.

- Configured/indicated parameter.
- CSI-RS resource for associated channel measurement/interference measurement, time gap between RS occasions (for example, offset between slots).
- Time domain operation of a CSI-RS resource for associated channel measurement (for example, periodic/semi-persistent/aperiodic).
- Predicted time offset of an associated model/functionality.
- The number of time instances associated with a reported value (result) (for example, the number of slots associated with a reported predicted value).

<<Option 1-4>>

Y may be specified in a specification independent of an AI/ML model/functionality and a computation metrics (performance metrics) associated with the monitor result reporting.

Z' may be determined similarly to the third embodiment. Options 1-3 and 1-4 may be applied to aperiodic CSI reporting derived from the model/functionality.

{Option 2}

In the time domain of a CSI reference resource, $n_{CSI\_ref}/n_{CSI\_ref\_AI}$ may be the same as the reporting result derived from a model/functionality associated with monitor result reporting. $n_{CSI\_ref\_AI}$ may be determined similarly to $n_{CSI\_ref}$ of option 1.

{Option 3}

The time domain of a CSI reference resource may be a single DL slot in $n - n_{CSI\_ref} - n_{CSI\_ref\_AI} - n_{CSI\_ref\_monitoring}$. $n_{CSI\_ref\_monitoring}$ may be determined similarly to $n_{CSI\_ref}$ of option 1.

The processing time for a monitor result is longer than the processing time for an inference result. Hence, by considering an additional offset from a CSI reference resource for the inference result, the timing of CSI reporting can be controlled more appropriately.

According to the sixth embodiment described above, it is possible to appropriately control the time domain of a CSI reference resource for monitor result reporting.

<Seventh Embodiment>

A seventh embodiment relates to time restriction for CSI reporting/monitor result reporting based on a plurality of times of occasions.

When the UE derives CSI, based on a plurality of times of CSI-RS occasions, it is assumed that the UE cannot acquire appropriate CSI only with the latest CSI.

Thus, in the present embodiment, time restriction for CSI reporting based on a plurality of occasions will be described.

The seventh embodiment can be further classified into aspects 7-1 to 7-3 according to a specific condition.

{Aspect 7-1}

When a specific higher layer parameter is configured, a UE has to derive channel measurement for computing a monitor result value (monitored result value) reported in the n-th UL slot.

In this case, the UE may derive the channel measurement, based (only) on the latest X occasions not later than (not after) a CSI reference resource, for an SS/PBCH or an NZP CSI-RS associated with CSI resource setting.

X above may be a configured/indicated parameter, a parameter reported in the UE capability, a predefined parameter, or a parameter associated with a model/functionality.

The above-described specific higher layer parameter may be a parameter (for example, timeRestrictionForChannelMeasurements) related to time restriction for channel measurements.

{Aspect 7-2}

When a specific higher layer parameter is configured, a UE has to derive channel measurement for computing a result value reported in the n-th UL slot. The result value may be an output derived from a model/-functionality that needs a plurality of RS occasions (for example, temporal CSI prediction, temporal beam prediction).

In this case, the UE may derive the channel measurement, based (only) on the latest X occasions not later than (not after) a CSI reference resource, for an SS/PBCH or an NZP CSI-RS associated with CSI resource setting.

X above may be a configured/indicated parameter, a parameter reported in the UE capability, a predefined parameter, or a parameter associated with a model/functionality.

The above-described specific higher layer parameter may be a parameter (for example, timeRestrictionForChannelMeasurements) related to time restriction for channel measurements.

{Aspect 7-3}

When a specific higher layer parameter is configured, a UE has to derive channel measurement for computing a predicted PMI reported in the n-th UL slot. The predicted PMI may be, for example, an enhanced type 2 predicted PMI or an enhanced type 2 predicted PMI for port selection.

In this case, the UE may derive the channel measurement, based (only) on the latest X occasions not later than (not after) a CSI reference resource, for an SS/PBCH or an NZP CSI-RS associated with CSI resource setting.

X above may be a configured/indicated parameter, a parameter reported in UE capability, or a predefined parameter (for example, some values some values computed based on $N_4$). Here, $N_4$ may denote the length of a base vector (DFT base vector) of a Doppler domain (DD)/time domain (TD) (the number of bases of DD/TD). $N_4$ may be configured by higher layer signaling.

The above-described specific higher layer parameter may be a parameter (for example, timeRestrictionForChannelMeasurements) related to time restriction for channel measurements.

{Variations}

A UE may not expect that the above-described specific higher layer parameter (for example, timeRestrictionForChannelMeasurements) is configured for reporting of a predicted PMI.

According to the seventh embodiment described above, it is possible to appropriately control channel measurement, based on a plurality of times of CSI-RS occasions.

<Eighth Embodiment>

An eighth embodiment relates to the number of CPU occupancies in monitor result reporting.

As described above, the number of CPU occupancies for monitor result reporting is also studied. In this case, a dedicated definition is considered to be necessary. For example, the following computations are needed for computation of a monitor result.

- Computation of an inference result
- Computation of performance metrics
- Check of whether an event occurrence based on performance metrics is present, when the monitor result is a content related to an event occurrence

Definition of the number of CPU occupancies taking account of the monitor result will be described below.

The number of CPU occupancies for monitor result reporting may be defined based on any of Alt1 to Alt3 below.

<Alt1>

A new value/expression may be defined as the number of CPU occupancies for monitor result reporting.

<Alt2>

The sum of the number of CPU occupancies and an additional value for reporting of information derived from a model/functionality (total value).

<Alt3>

The same value as the number of CPU occupancies for reporting of information derived from a model/functionality.

The new value/expression in Alt1 and the additional value in Alt2 may be determined based on at least one of the following.

- Specific value for each model/functionality or value that is the same among a plurality of models/functionalities.
- Value dependent on the content of a reported monitor result (for example, a value related to an event occurrence/performance metrics, or a value according to a computed performance metrics).

These values (new values/expressions or additional values) may be determined based on UE capability/predefined rule. As a variation, for example, it may be assumed that a default value defined in a specification is applied when no corresponding UE capability is reported. In other words, when the UE does not report the UE capability, the default value defined in a specification may be assumed.

According to the eighth embodiment described above, the number of CPU occupancies in monitor result reporting can be clarified.

<Supplements>

{AI Model Information}

In the present disclosure, AI model information may mean information including at least one of the following:

- information of input/output of an AI model,
- information of pre-processing/post-processing for input/output of an AI model,
- information of a parameter of an AI model,
- training information for an AI model,
- inference information for an AI model, and
- performance information related to an AI model.

Here, the information of input/output information of an AI model may include information related to at least one of the following:

- content of input/output data (for example, an RSRP, a SINR, amplitude/phase information in a channel matrix (or a precoding matrix), information related to an angle of arrival (AoA), information related to an angle of departure (AoD), or location information),
- auxiliary information of data (which may be referred to as meta-information),
- type of input/output data (for example, immutable value, floating point number),
- bit width of input/output data (for example, 64 bits for each input value),
- quantization interval (quantization step size) of the input/output data (for example, 1 dBm for L1-RSRP), and
- range that input/output data can take (for example, [0, 1]).

Note that, in the present disclosure, the information related to an AoA may include information related to at least one of an azimuth angle of arrival and a zenith angle of arrival (ZoA). The information related to an AoD may include, for example, information related to at least one of an azimuth angle of departure and a zenith angle of departure (ZoD).

In the present disclosure, the location information may be location information related to a UE/NW. The location information may include at least one of information (for example, latitude, longitude, altitude) obtained by using a positioning system (for example, a satellite positioning system (Global Navigation Satellite System (GNSS), the Global Positioning System (GPS), or the like)), information of a BS adjacent to (or serving) the UE (for example, an identifier (ID) of the BS/cell, the distance between the BS and the UE, a direction/angle of the BS (UE) as viewed from the UE (BS), coordinates of the BS (UE) as viewed from the UE (BS) (for example, X/Y/Z-axis coordinates) or the like.), a specific address of the UE (for example, an Internet Protocol (IP) address), and the like. The location information of the UE is not limited to information based on the position of the BS, and may be information based on a specific point.

The location information may include information related to implementation of the UE/NW itself (for example, location/position/orientation of each antenna, location/orientation of each antenna panel, the number of antennas, the number of antenna panels, or the like).

The location information may include mobility information. The mobility information may include information indicating at least one of information indicating a mobility type, the moving speed of the UE, the acceleration of the UE, the moving direction of the UE, and the like.

Here, the mobility type may correspond to at least one of a fixed location UE, a movable/moving UE, a no mobility UE, a low mobility UE, a middle mobility UE, a high mobility UE, a cell-edge UE, a not-cell-edge UE, and the like.

In the present disclosure, environment information (for data) may be information related to an environment in which data is acquired/used, and may correspond to, for example, frequency information (band ID or the like), environment type information (information indicating at least one of indoor, outdoor, Urban Macro (UMa), Urban Micro (Umi), and the like), information indicating Line Of Site (LOS)/Non-Line Of Site (NLOS), or the like

Here, the LOS may mean that the UE and the BS are in an environment where they can see each other (or there is no shielding object), and NLOS may mean that the UE and the BS are not in an environment where they can see each other (or there is a shielding object). The information indicating LOS/NLOS may indicate a soft value (for example, a probability of LOS/NLOS) or may indicate a hard value (for example, either LOS/NLOS).

In the present disclosure, the meta-information may mean, for example, information related to input/output information suitable for an AI model, information related to acquired/acquirable data, or the like. To be more specific, the meta-information may include information related to a beam of an RS (for example, CSI-RS/SRS/SSB or the like) (for example, the angle at which each beam is directed, a 3-dB beam width, the shape of each directed beam, the number of beams), gNB/UE antenna layout information, frequency information, environmental information, meta-information ID, and the like. Note that the meta-information may be used as an input/output of the AI model.

The information of pre-processing/post-processing for an input/output of an AI model may include information related to at least one of the following:

- whether or not to apply normalization (for example, Z-score normalization (standardization), minimum-maximum (min-max) normalization),
- parameter for normalization (for example, mean/-variance for Z-score normalization, the minimum value/maximum value for min-max normalization),
- whether or not to apply a specific numerical conversion method (for example, one hot encoding, label encoding, or the like), and
- selection rule for whether or not to be used as training data.

For example, as pre-processing for input information x, normalized input information $x_{new}$ obtained by performing Z score normalization ($x_{new} = (x - \mu)/\sigma$) where $\mu$ denotes the average of x and $\sigma$ denotes the standard deviation) may be input to an AI model, and final output y may be obtained by performing post-processing on the output $y_{out}$ from the AI model.

The information of a parameter of an AI model may include information related to at least one of the following:

- weight (for example, a coefficient (coupling coefficient) of a neuron) information in the AI model,
- structure of the AI model,
- type of the AI model as a model component (for example, Residual Network (ResNet), DenseNet, RefineNet, transformer model, CRBlock, recurrent neural network (RNN), long short-term memory (LSTM), or gated recurrent unit (GRU)), and
- function of the AI model as a model component (for example, a decoder or an encoder).

Note that the weight information in an AI model may include information related to at least one of the following:

- bit width (size) of the weight information,
- quantization interval of the weight information,
- granularity of the weight information,
- range that the weight information can take,
- parameter of a weight in the AI model,
- information of a difference from the AI model before update (in a case of update), and
- method of weight initialization (for example, zero initialization, random initialization (based on normal distribution/uniform distribution/truncated normal distribution), Xavier initialization (for sigmoid function), or He initialization (for rectified linear units (ReLUs)).

The structure of an AI model may include information related to at least one of the following:

- the number of layers,
- type of layers (for example, convolutional layer, activation layer, dense layer, normalization layer, pooling layer, or attention layer),
- layer information,
- time-series-specific parameter (for example, bidirectional, time step), and
- parameter for training (for example, type of function (L2 regularization, drop-out function, or the like), where to place this function (for example, after which layer)).

The layer information may include information related to at least one of the following:

- the number of neurons in each layer,
- kernel size,
- stride for a pooling layer/convolutional layer,
- pooling method (MaxPooling, AveragePooling, or the like),
- information of a residual block,
- the number of heads,
- normalization method (such as batch normalization, instance normalization, or layer normalization), and
- activation function (sigmoid, tanh function, ReLU, leaky ReLU information, Maxout, or Softmax).

A given AI model may be included as a component of another AI model. For example, a given AI model may be a ResNet, which is model component #1, a transformer model, which is model component #2, or an AI model in which processing proceeds in the order of a dense layer and a normalization layer.

The training information for an AI model may include information related to at least one of the following:

- information for the optimization algorithm (for example, type of optimization (stochastic gradient descent (SGD)), AdaGrad, Adam, or the like), parameter of the optimization (learning rate, momentum information, or the like),
- information on a loss function (for example, information related to metrics of a loss function (mean absolute error (MAE), mean square error (MSE), cross-entropy loss, NLLLoss, Kullback-Leibler (KL) divergence, or the like)),
- parameter (for example, layer, weight) to be frozen for training,
- parameter (for example, layer, weight) to be updated,
- parameter (for example, layer, weight) to be an initial parameter (to be used as an initial parameter) for training, and
- training/updating method of the AI model (for example, the (recommended) number of epochs, batch size, or the number of data used for training).

The inference information for an AI model may include information related to branch pruning of a decision tree, parameter quantization, a function of the AI model, or the like. Here, the function of the AI model may correspond to, for example, at least one of time-domain beam prediction, space-domain beam prediction, an autoencoder for CSI feedback, an autoencoder for beam management, and the like.

An autoencoder for CSI feedback may be used as follows:

- The UE transmits bits output as a result of inputting, to an AI model of an encoder, CSI/channel matrix/precoding matrix, to be encoded, as CSI feedback (CSI report).
- The BS reconfigures the CSI/channel matrix/precoding matrix output as a result of inputting, to an AI model of a decoder, the received bits to be encoded.

In space-domain beam prediction, the UE/BS may input, to an AI model, a measurement result (beam quality, for example, an RSRP) based on a sparse (or wide) beam and output a fine (or narrow) beam quality.

In time-domain beam prediction, the UE/BS may input, to an AI model, a time-series (past, current, or the like) measurement result (beam quality, for example, an RSRP) and output a future beam quality.

The performance information related to an AI model may include information related to an expected value of a loss function defined for the AI model.

The AI model information in the present disclosure may include information related to an application range (applicable range) of an AI model. The application range may be indicated by a physical cell ID, a serving cell index, or the like. The information related to the application range may be included in the above-described environmental information.

The AI model information related to a specific AI model may be predetermined in a standard, or a network (NW) may notify the UE of this AI model information. The AI model defined in a standard may be referred to as a reference AI model. The AI model information related to a reference AI model may be referred to as reference AI model information.

Note that the AI model information in the present disclosure may include an index for identifying an AI model (which may be referred to as, for example, an AI model index, an AI model ID, a model ID, or the like). The AI model information in the present disclosure may include an AI model index in addition to/instead of the information of input/output of an AI model described above. The association between the AI model index and the AI model information (for example, information of input/output of an AI model) may be predetermined in a standard, or the NW may notify the UE of the association.

The AI model information in the present disclosure may be associated with an AI model, and may also be referred to as AI model relevant information or simply as relevant information, or the like. The AI model relevant information need not explicitly include information for identifying the AI model. The AI model relevant information may be information including only meta-information, for example.

In the present disclosure, a model ID and an ID corresponding to a set of AI models (model set ID) may be interchangeably interpreted. In the present disclosure, a model ID and meta-information ID may be interchangeably interpreted. The meta-information (or meta-information ID) may be associated with information related to a beam (beam configuration) as described above. For example, the meta-information (or meta-information ID) may be used for the UE to select an AI model in consideration of which beam is used by the BS, or may be used to make notification of which beam the BS is to use in order to apply an AI model deployed by the UE. Note that, in the present disclosure, the meta-information ID and an ID corresponding to a set of pieces of meta-information (meta-information set ID) may be interchangeably interpreted.

{Notification of Information to UE}

Notification of any information to a UE (from an NW) (in other words, reception of any information in the UE from the BS) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- supporting of specific processing/operation/control/information for at least one of the embodiments above.
- maximum slot offset between an input RS resource and a reference RS resource.
- value related to CSI computation delay for monitor result reporting (CSI computation delay requirement).
- value X/Y indicating the number of times of occasions.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling CSI reporting/monitor result reporting, any RRC parameter for a specific release (for example, Rel. 18/19), or the like.

When the UE does not support at least one of the specific UE capabilities above or is not configured with the specific information, operation of Rel. 15/16/17 may be applied, for example.

(Supplementary Notes)

Regarding one embodiment (first/second embodiment) of the present disclosure, the following supplementary notes of the invention will be given.

{Supplementary Note 1}

A terminal including:

a receiving section that receives a configuration related to monitor result reporting of a model; and
a control section that controls the monitor result reporting, wherein
the monitor result reporting is associated with channel state information (CSI) reporting.

{Supplementary Note 2}

The terminal according to supplementary note 1, wherein one or more resource settings are associated with a configuration of the CSI reporting.

{Supplementary Note 3}

The terminal according to supplementary note 1 or 2, wherein a given resource setting corresponds to a reference signal (RS) resource for input or an RS resource for reference.

{Supplementary Note 4}

The terminal according to any one of supplementary notes 1 to 3, wherein

the control section controls trigger of the monitor result reporting, based on the configuration, and
a reference signal (RS) resource selected from a resource setting in the configuration is associated for each trigger state.

(Supplementary Notes)

Regarding one embodiment (third/fourth/sixth/eighth embodiment) of the present disclosure, the following supplementary notes of the invention will be given.

{Supplementary Note 1}

A terminal including:

a receiving section that receives a configuration related to monitor result reporting of a model; and
a control section that controls the monitor result reporting, wherein
the control section controls timing of the monitor result reporting or channel state information (CSI) reporting, based on information associated with the monitor result reporting and the CSI reporting.

{Supplementary Note 2}

The terminal according to supplementary note 1, wherein the control section determines a CSI computation time, based on an association related to a CSI computation delay requirement.

{Supplementary Note 3}

The terminal according to supplementary note 1 or 2, wherein the control section judges trigger of the monitor result reporting or the CSI reporting, based on a CSI resource for model input or a CSI resource for performance monitoring reference.

{Supplementary Note 4}

The terminal according to any one of supplementary notes 1 to 3, wherein the control section controls the monitor result reporting or the CSI reporting, based on a CSI reference resource, and determines a time domain of the CSI reference resource, based on a specific rule.

(Supplementary Notes)

Regarding one embodiment (fifth/seventh embodiment) of the present disclosure, the following supplementary notes of the invention will be given.

{Supplementary Note 1}

A terminal including:

a receiving section that receives a configuration related to channel state information (CSI) reporting based on a plurality of times of occasions; and
a control section that controls dropping of the CSI reporting or channel measurement, based on the configuration.

{Supplementary Note 2}

The terminal according to supplementary note 1, wherein the control section drops the CSI reporting when no CSI-RS transmission occasion for channel measurement is present after a CSI reference resource.

{Supplementary Note 3}

The terminal according to supplementary note 1 or 2, wherein the control section drops reporting of a predicted precoding matrix indicator (PMI) when a plurality of transmission occasions are requested for computation of the PMI.

{Supplementary Note 4}

The terminal according to any one of supplementary notes 1 to 3, wherein the control section controls dropping of the CSI reporting or channel measurement, based on the number of times of occasions.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

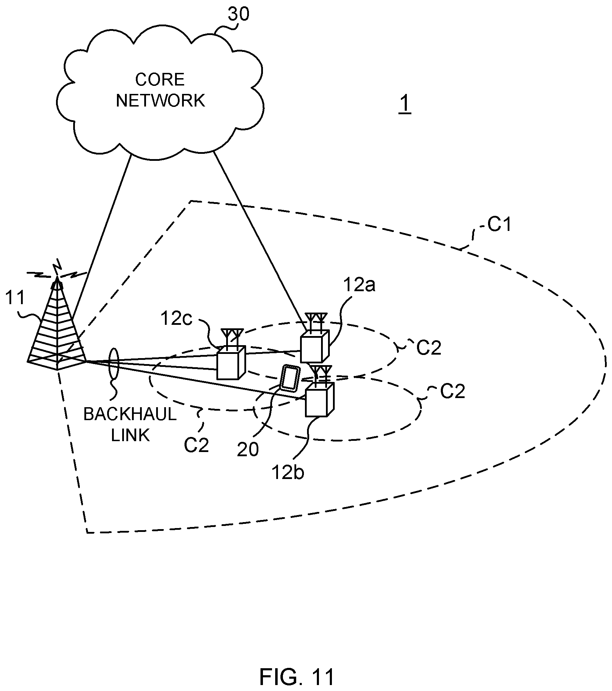

FIG. 11 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NFs), such as a User Plane Function (UPF), an Access and Mobility management Function (AMF), a Session Management Function (SMF), Unified Data Management (UDM), an ApplicationFunction (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as DL assignment, DL DCI, and so on, and DCI for scheduling the PUSCH may be referred to as UL grant, UL DCI, and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an SS/PBCH block, an SS Block (SSB), and so on. Note that an SS, an SSB, and so on may be referred to as a reference signal.

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

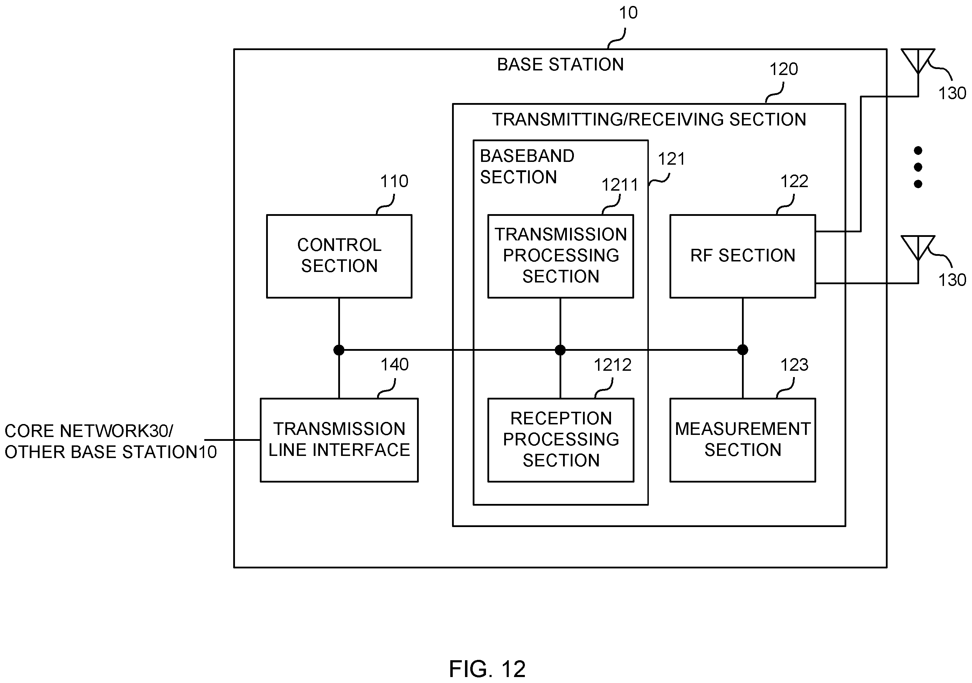

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration related to monitor result reporting of a model. The control section 110 may control the monitor result reporting. The monitor result reporting may be associated with channel state information (CSI) reporting.

The control section 110 may control timing of the monitor result reporting or the channel state information (CSI) reporting, based on information associated with the monitor result reporting and the CSI reporting.

The transmitting/receiving section 120 may transmit a configuration related to channel state information (CSI) reporting, based on a plurality of times of occasions. The control section 110 may control dropping of the CSI reporting or channel measurement, based on the configuration.

(User Terminal)

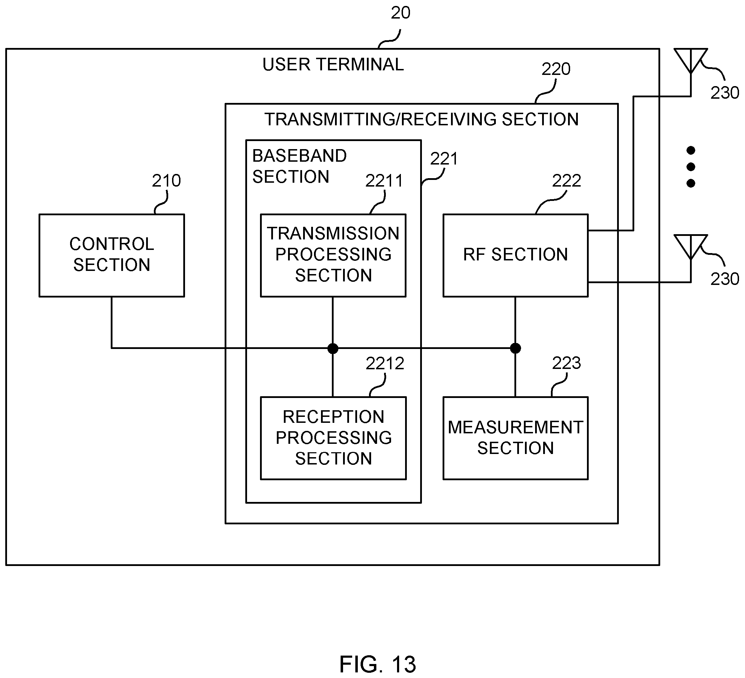

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration related to the monitor result reporting of a model. The control section 210 may control the monitor result reporting. The monitor result reporting may be associated with channel state information (CSI) reporting. One or more resource settings may be associated with a configuration of the CSI reporting. A given resource setting may correspond to a reference signal (RS) resource for input or an RS resource for reference.

The control section 210 may control timing of the monitor result reporting or the channel state information (CSI) reporting, based on information associated with the monitor result reporting and the CSI reporting. The control section 210 may determine a CSI computation time, based on an association related to a CSI computation delay requirement. The control section 210 may judge trigger of the monitor result reporting or the CSI reporting, based on a CSI resource for model input or a CSI resource for performance monitoring reference. The control section 210 may control the monitor result reporting or the CSI reporting, based on a CSI reference resource, and determines a time domain of the CSI reference resource, based on a specific rule.

The transmitting/receiving section 220 may receive a configuration related to channel state information (CSI) reporting, based on a plurality of times of occasions. The control section 210 may control dropping of the CSI reporting or channel measurement, based on the configuration. The control section 210 may drop the CSI reporting when no CSI-RS transmission occasion for channel measurement is present after a CSI reference resource. The control section 210 may drop reporting of a predicted precoding matrix indicator (PMI) when a plurality of transmission occasions are requested for computation of the PMI. The control section 210 may control dropping of the CSI reporting or channel measurement, based on the number of times of occasions.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

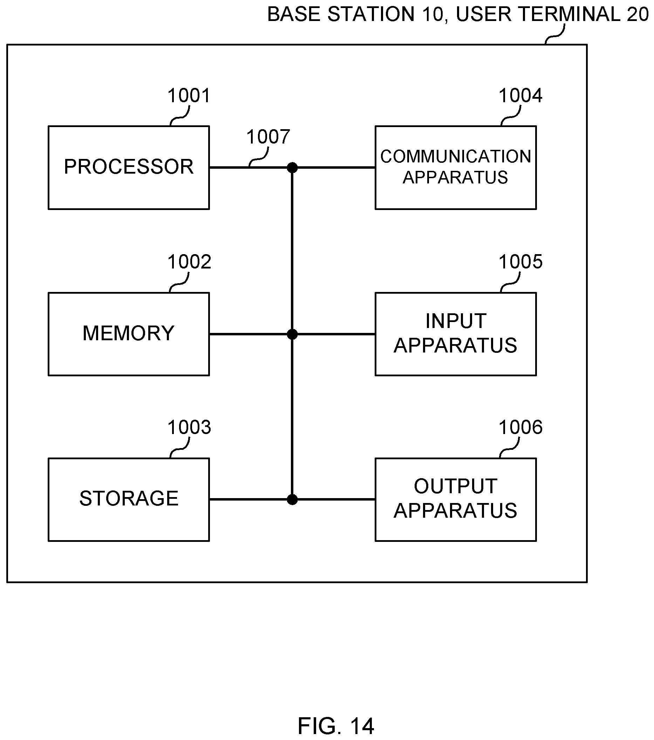

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

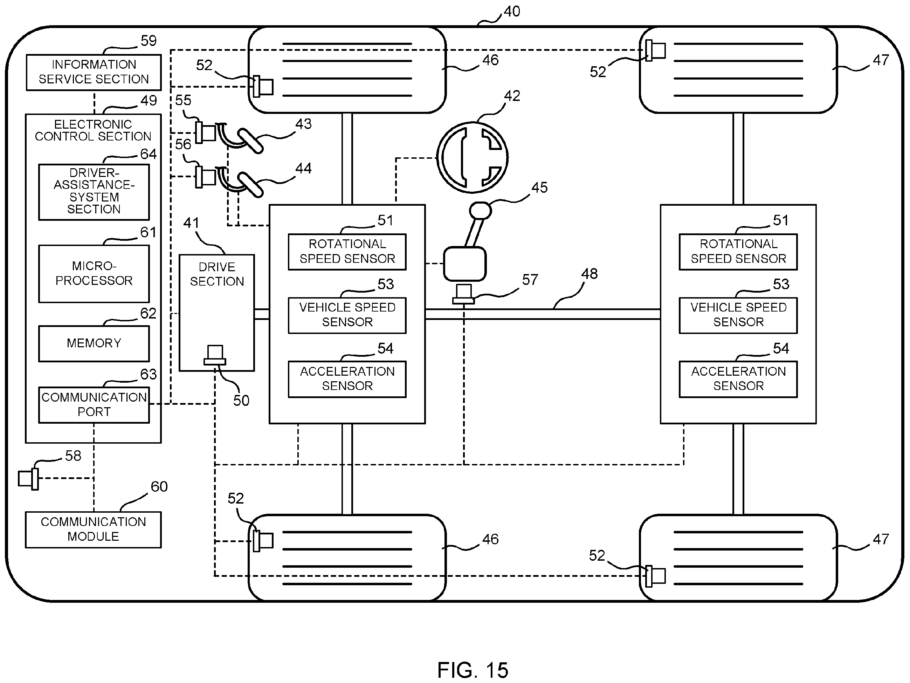

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", and the like may be used interchangeably (irrespective of positive degree, comparative degree, and superlative degree). In the present disclosure, expressions obtained by adding "i-th" to words such as "good", "bad", "large", "small", "high", "low", "early", "late", and the like may be used interchangeably (irrespective of positive degree, comparative degree, and superlative degree) (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

**Claims**

1. A terminal comprising:

   a receiving section that receives a configuration related to monitor result reporting of a model; and

a control section that controls the monitor result reporting, wherein
the control section controls timing of the monitor result reporting or channel state information (CSI) reporting, based on information associated with the monitor result reporting and the CSI reporting.

2. The terminal according to claim 1, wherein the control section determines a CSI computation time, based on an association related to a CSI computation delay requirement.

3. The terminal according to claim 1, wherein the control section judges trigger of the monitor result reporting or the CSI reporting, based on a CSI resource for model input or a CSI resource for performance monitoring reference.

4. The terminal according to claim 1, wherein the control section controls the monitor result reporting or the CSI reporting, based on a CSI reference resource, and determines a time domain of the CSI reference resource, based on a specific rule.

5. A radio communication method for a terminal, the radio communication method comprising:

   receiving a configuration related to monitor result reporting of a model; and
   controlling the monitor result reporting, wherein timing of the monitor result reporting or channel state information (CSI) reporting is controlled based on information associated with the monitor result reporting and the CSI reporting.

6. A base station comprising:

   a transmitting section that transmits a configuration related to monitor result reporting of a model; and
   a control section that controls the monitor result reporting, wherein
   the control section controls timing of the monitor result reporting or channel state information (CSI) reporting, based on information associated with the monitor result reporting and the CSI reporting.

FIG. 1

EP 4 753 322 A1

FIG. 2

FIG. 3

```
┌───────────────┐     ┌───────────────┐     ┌───────────────┐     ┌───────────────┐
│  Reporting for │     │               │     │     Model     │     │     Model     │
│  performance   │ ──► │  Performance  │ ──► │ evaluation at │ ──► │  activation/  │
│  monitoring    │     │  monitoring   │     │      NW       │     │  deactivation │
└───────────────┘     └───────────────┘     └───────────────┘     └───────────────┘
       ▲                                                                   │
       └───────────────────────────────────────────────────────────────────┘
```

FIG. 4

# FIG. 5A

Sparse Beam Measurements

AI Model

Beam Quality with Dense Beams

# FIG. 5B

Historical Beam Measurements

AI Model

Beam Quality in Future

TIME

TIME

EP 4 753 322 A1

FIG. 6

FIG. 7A

| CSI computation delay requirement 1 | | |
|---|---|---|
| $\mu$ | $Z_1$ | $Z_1^{'}$ |
| 0 | 10 | 8 |
| 1 | 13 | 11 |
| 2 | 25 | 21 |
| 3 | 43 | 36 |

FIG. 7B

| CSI computation delay requirement 2 | | | | | |
|---|---|---|---|---|---|
| $\mu$ | $Z_1$ | $Z_1^{'}$ | $Z_2$ | $Z_2^{'}$ | $Z_3$ | $Z_3^{'}$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | $\min(44, X_2+KB_1)$ | $X_2$ |
| 3 | 97 | 85 | 152 | 140 | $\min(97, X_3+KB_2)$ | $X_3$ |

EP 4 753 322 A1

FIG. 8

Reporting of Top-K' Beams out of K Beams

⬚⬚⬚⬚⬚⬚          ⬚⬚⬚⬚⬚⬚⬚⬚ ⟶ CSI report

Measurement of Beams in Set B ⟶ [ AI model ] ⟶ Measurement of Top-K Beams in Set A      **TIME**

▨ CSI-RS to be measured

☐ CSI-RS not to be measured

FIG. 9

EP 4 753 322 A1

$$n = \left\lceil n' \cdot \frac{2^{\mu_{DL}}}{2^{\mu_{UL}}} \right\rceil$$

FIG. 10

FIG. 11

FIG. 12

EP 4 753 322 A1

FIG. 13

EP 4 753 322 A1

BASE STATION 10, USER TERMINAL 20

1001

PROCESSOR

1007

1004

COMMUNICATION APPARATUS

1002

MEMORY

1005

INPUT APPARATUS

1003

STORAGE

1006

OUTPUT APPARATUS

FIG. 14

FIG. 15

## INTERNATIONAL SEARCH REPORT

| International application No. |
| --- |
| **PCT/JP2023/027267** |

**A.    CLASSIFICATION OF SUBJECT MATTER**

*H04W 24/10*(2009.01)i
FI:    H04W24/10

According to International Patent Classification (IPC) or to both national classification and IPC

**B.    FIELDS SEARCHED**

Minimum documentation searched (classification system followed by classification symbols)

H04W24/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | CATT. Discussion on AI/ML for CSI feedback enhancement [online]. 3GPP TSG RAN WG1 #113 R1-2304723. 15 May 2023<br>section 2.3 | 1-6 |
| Y | JP 2023-508964 A (LG ELECTRONICS INC.) 06 March 2023 (2023-03-06)<br>paragraphs [0178], [0232], [0642]-[0650], [0675]-[0677] | 1-6 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **27 December 2023** | **16 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/027267**

| Patent document cited in search report | Publication date (day/month/year) | Patent family member(s) | Publication date (day/month/year) |
|---|---|---|---|
| JP 2023-508964 A | 06 March 2023 | US 2022/0239358 A1 paragraphs [0197], [0249], [0624]-[0628], [0652]-[0654] WO 2021/162517 A1 EP 4106220 A1 KR 10-2022-0050936 A CN 114731193 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010